# EUROPÄISCHE PATENTSCHRIFT

(11) **EP 2 050 777 B1**
(45) Veröffentlichungstag und Bekanntmachung des Hinweises auf die Patenterteilung: **16.06.2010**
(21) Anmeldenummer: 08160845.7
(22) Anmeldetag: 22.07.2008
(51) Int. Cl.: C08G 77/00, C08G 77/388

(54) **Mehrstufiges Verfahren zur Herstellung von Aminoalkylgruppen aufweisenden Organopolysiloxanen**
Multistage process for preparing organopolysiloxanes comprising aminoalkyl groups
Méthode multi-étapes de préparation de polysiloxanes organiques portant des fonctions aminoalkyles

(30) Priorität: 01.08.2007 DE 102007036069
(43) Veröffentlichungstag der Anmeldung: 22.04.2009
(73) Patentinhaber: Wacker Chemie AG, 81737 München (DE)
(72) Erfinder: Geisberger, Gilbert, 84503 Altötting (DE); Schildbach, Daniel, 84524 Neuötting (DE)
(74) Vertreter: Deffner-Lehner, Maria

(56) Entgegenhaltungen:
- EP-A- 1 580 215

## Beschreibung

Die Erfindung betrifft ein Verfahren zur Herstellung von Aminoalkylgruppen aufweisenden Organopolysiloxanen.

Aminoalkylgruppen tragende Organopolysiloxanöle, im Folgenden als Aminöle bezeichnet, zählen zu den bedeutendsten organisch funktionalisierten Organopolysiloxanen und werden in vielen verschiedenen Anwendungsbereichen erfolgreich eingesetzt. Dazu zählen u. a. die Textilausrüstung, der Bautenschutz, kosmetische Formulierungen oder die Behandlung von Oberflächen. Bei den meisten Anwendungen in diesen Gebieten kommt es darauf an, Aminöle einzusetzen, die eine hohe Qualität aufweisen.

Aminöle werden meist durch Kondensations- und/oder Equilibrierungsreaktionen zwischen linearen oder cyclischen Organopolysiloxanen und aminoalkylfunktionalisierten Alkoxysilanen bzw. deren Teil- oder Vollhydrolysaten hergstellt, meist unter Einwirkung katalytischer Mengen an basischen anorganischen oder organischen Verbindungen.

Nach dem gängigen Stand der Technik werden Aminöle im so genannten Batch-Verfahren, also kampagnenweise in diskontinuierlichen Rührwerksprozessen, hergestellt. Rührwerke sind durch die Vielfalt der in ihnen durchführbaren chemischen Reaktionen sehr flexibel. Batchverfahren werden allerdings bei sehr großen Produktionskampagnen und hohen Massendurchsätzen unwirtschaftlich. Das liegt vor allem daran, dass man lange Zeiten zum Aufheizen und Abkühlen sowie zum Befüllen und Entleeren der mehrere Kubikmeter großen Behälter in Kauf nehmen muss (hoher Betriebsaufwand, hohe Arbeitskosten).

Eine Schwierigkeit gängiger Aminölsynthesen ist die Deaktivierung des verwendeten Kondensations- bzw.

Equilibrierungskatalysators. Wird der basische Katalysator auf herkömmliche Weise mit einer Säure neutralisiert, wie z. B. in US 5,077,421 beschrieben, kommt es durch Salzausfällungen zu Trübungen. Ein zusätzlicher Filtrationsschritt ist daher erforderlich. Dies führt bei diesem Batchverfahren zu längeren Anlagenbelegzeiten.

Eine Möglichkeit, solche Trübungen zu vermeiden, ist das Verfahren, die verwendeten Tetraalkyl-ammoniumhydroxide bzw. Ammoniumphosphate und -borate nach beendeter Reaktion durch thermische Zersetzung zu deaktivieren, wie es z. B. in US 4,652,662 (korrespondierende DE-A 3418358) beschrieben ist. Die dabei anfallenden Zersetzungsprodukte müssen jedoch im Vakuum destillativ entfernt werden.
Durch die Katalysatordeaktivierung sind bei diesem Batchverfahren höhere Temperaturen notwendig, was zu längeren Abkühlzeiten führt bevor der nächste Ansatz gefahren werden kann, was wiederum eine längere Anlagenbelegzeit zur Folge hat.

US 7,129,369 (korrespondierende EP-A 1580215) beschreibt ein Verfahren, bei dem trotz der Verwendung von Alkalimetallhydroxiden und -alkoholaten ohne Filtrationsschritt trübungsfreie Aminöle erhalten werden, indem mit Silylphosphaten neutralisiert wird, wodurch siliconlösliche Neutralisationsprodukte erhalten werden.
Auch hierbei handelt es sich um ein Batchverfahren mit langer Anlagenbelegzeit. Überschüssiges Neutralisationsmittel stört nach der Anlagenentleerung beim nachfolgenden Ansatz, sodass zeitaufwändig die Anlage vorher gereinigt werden muss. Wird die Anlage vor dem nächsten Ansatz nicht gereinigt, wird entweder die Reaktionsgeschwindigkeit verlangsamt oder eine höhere Katalysatorkonzentration ist notwendig, was in jedem Fall eine schlechtere Produktqualität zur Folge hat.

Es bestand die Aufgabe, ein Verfahren bereitzustellen, bei dem die oben genannten Nachteile vermieden werden, das zeit- und energiesparend und sehr wirtschaftlich ist, bei dem höhere Massendurchsätze erzielt werden und die Anlagenkapazität erhöht wird, bei dem Aminoalkylgruppen aufweisende Organopolysiloxane mit konstant guten Produkteigenschaften erhalten werden und bei dem insbesondere die Menge an eingesetztem Katalysator verringert werden kann.
Die Aufgabe wird durch die Erfindung gelöst.

Gegenstand der Erfindung ist ein Verfahren zur Herstellung von Alkylgruppen aufweisenden Organopolysiloxanen durch
(i) Umsetzung von
   (A) linearen, cyclischen oder verzweigten Organopolysiloxanen mit
   (B) Aminoalkylsilanen, die einen SiC-gebundenen, basischen Stickstoff aufweisenden Kohlenwasserstoffrest und 2 oder 3 hydrolysefähige Gruppen aufweisen, oder deren Teil- oder Vollhydrolysate,
      in Gegenwart von
   (C) basischen Katalysatoren
      und gegebenenfalls in Gegenwart von
   (D) Kettenterminierungsreagenzien
   bei einer Temperatur von mindestens 60°C,
   anschließend an die Umsetzung (i)
(ii) Deaktivierung der eingesetzten basischen Katalysatoren (C) und
(iii) Abkühlung der Reaktionsprodukte auf eine Temperatur unter 60°C, wobei die Abkühlung (iii) vor, während oder nach der Deaktivierung (ii) der Katalysatoren, vorzugsweise nach der Deaktivierung (ii) der Katalysatoren, erfolgt,
mit der Maßgabe, dass das Verfahren in mindestens zwei aufeinanderfolgenden Rührkesseln durchgeführt wird, wobei die Umsetzung (i) und die Abkühlung (iii) getrennt voneinander in verschiedenen Rührkesseln erfolgen.

Bei dem erfindungsgemäßen Verfahren kann
die Deaktivierung (ii) entweder
im gleichen Rührkessel wie die Umsetzung (i) (im Anschluss an die Umsetzung) erfolgen oder
im gleichen Rührkessel wie die Abkühlung (iii) (vor, während oder nach der Abkühlung, vorzugsweise vor der Abkühlung) erfolgen oder
in einem eigenen Rührkessel getrennt von der Umsetzung (i) und Abkühlung (iii) erfolgen.

Bevorzugt wird das erfindungsgemäße Verfahren in zwei aufeinanderfolgenden Rührkesseln durchgeführt.

Vorzugsweise erfolgt die Umsetzung (i) in einem ersten Rührkessel und die Abkühlung (iii) in einem nachfolgenden zweiten Rührkessel, wobei die Deaktivierung (ii) entweder im ersten oder im zweiten Rührkessel erfolgt, wobei das Verfahren so durchgeführt wird, dass gleichzeitig während im nachfolgenden zweiten Rührkessel die Abkühlung (iii) der Reaktionsprodukte erfolgt, im ersten Rührkessel bereits die Umsetzung (i) der in den ersten Rührkessel wieder neu zugeführten Edukte erfolgt.

Bevorzugt erfolgt die Umsetzung (i) in einem ersten Rührkessel und die Deaktivierung (ii) und Abkühlung (iii) in einem nachfolgenden zweiten Rührkessel, wobei das Verfahren so durchgeführt wird, dass gleichzeitig während im nachfolgenden zweiten Rührkessel die Deaktivierung (ii) der Katalysatoren und die Abkühlung (iii) der Reaktionsprodukte erfolgt, im ersten Rührkessel bereits die Umsetzung (i) der in den ersten Rührkessel wieder neu zugeführten Edukte erfolgt.

In einer weiteren Ausführungsform kann das Verfahren auch so durchgeführt werden, dass die Umsetzung (i) und die anschließende Deaktivierung (ii) in einem ersten Rührkessel und die Abkühlung (iii) in einem nachfolgenden zweiten Rührkessel erfolgt, wobei gleichzeitig während im nachfolgenden zweiten Rührkessel die Abkühlung (iii) der Reaktionsprodukte erfolgt, im ersten Rührkessel bereits die Umsetzung (i) der in den ersten Rührkessel wieder neu zugeführten Edukte und die anschließende Deaktivierung (ii) der Katalysatoren erfolgt.

Nach erfolgter Reaktion (i) wird der in der Reaktionsmischung vorhandene Katalysator (C) deaktiviert, vorzugsweise durch Neutralisation oder thermische Zersetzung des basischen Katalysators (C).

Wenn die Deaktivierung (ii) durch Neutralisation der Katalysatoren erfolgt, wird vorzugsweise die Deaktivierung (ii) getrennt von der Umsetzung (i) (die im ersten Rührkessel erfolgt) im nachfolgenden zweiten Rührkessel durchgeführt und wenn die Deaktivierung (ii) durch thermische Zersetzung der Katalysatoren erfolgt, wird vorzugsweise die Deaktivierung (ii) im ersten oder zweiten Rührkessel durchgeführt.

Der Begriff Organopolysiloxane soll im Rahmen der vorliegenden Erfindung sowohl dimere als auch oligomere als auch polymere Siloxane umfassen.

Mit dem erfindungsgemäßen Verfahren können Aminöle beliebig möglicher Aminzahl erzeugt werden. Die Aminzahl entspricht dabei der Anzahl der ml einer 1M HCl, die zum Neutralisieren von 1 g Substanz erforderlich sind, und wird in Millimol Amingruppen pro Gramm Substanz angegeben. Vorzugsweise ist der Aminzahlbereich zwischen 0,001 und 12,5, bevorzugt der Bereich zwischen 0,01 und 5, besonders bevorzugt der Bereich zwischen 0,1 und 3 mmol Amingruppen pro Gramm Substanz.

Die Viskositäten der nach dem erfindungsgemäßen Verfahren hergestellten Aminöle können zwischen wasserflüssiger und standfester Konsistenz liegen. Die Viskosität, stets gemessen bei 25°C, beträgt vorzugsweise 1 mPa·s bis 10.000.000 mPa·s, bevorzugt 100 mPa·s bis 100.000 mPa·s, besonders bevorzugt 500 mPa·s bis 50.000 mPa·s.

Die Umsetzung (i) im ersten Rührkessel erfolgt vorzugsweise bei einer Temperatur von 60 bis 180°C, bevorzugt 80 bis 130°C, bei der auch die Deaktivierung (ii) erfolgen kann.

Das erfindungsgemäße Verfahren kann beim Druck der umgebenden Atmosphäre, also etwa bei 1020 hPa, durchgeführt werden, es kann aber auch bei höheren oder niedrigeren Drücken durchgeführt werden.

Die Deaktivierung kann z. B. durch chemische Reaktion des Katalysators mit einem Deaktivator - meist ein Neutralisationsmittel oder Inhibitor - erfolgen. Die Neutralisation der Katalysatoren erfolgt vorzugweise bei einer Temperatur von 20 bis 180°C, bevorzugt 60 bis 130°C. Die Deaktivierung kann aber durch thermische Zersetzung des Katalysators erfolgen. Die thermische Zersetzung erfolgt vorzugsweise bei einer Temperatur von 80 bis 180°C, bevorzugt 120 bis 180°C. Die Deaktivierung durch thermische Zersetzung des Katalysators kann erfolgen, indem das Reaktionsgemisch vorzugsweise in einen eigens auf die dazu notwendige Temperatur gebrachten nachfolgenden zweiten Rührkessel gebracht wird.

Falls sich durch die Reaktionsführung oder die Katalysatordeaktivierung Feststoffe im geförderten Reaktionsprodukt befinden, so können diese ggf. durch nachgeschaltete Verfahrensschritte entfernt werden. Bei solchen nachgeschalteten Verfahrensschritten kann es sich um eine kontinuierliche Filtration oder eine kontinuierliche Extraktion mit einem geeigneten Lösungsmittel oder um ein kontinuierliches adsorptives Verfahren an einem geeigneten Adsorptionsmittel handeln.

Die Abkühlung (iii) erfolgt vorzugsweise auf eine Temperatur von 20 bis 55°C.

Die Rührkessel werden jeweils vor der Befüllung bevorzugt nicht gereinigt (z. B. mit Lösungsmittel).

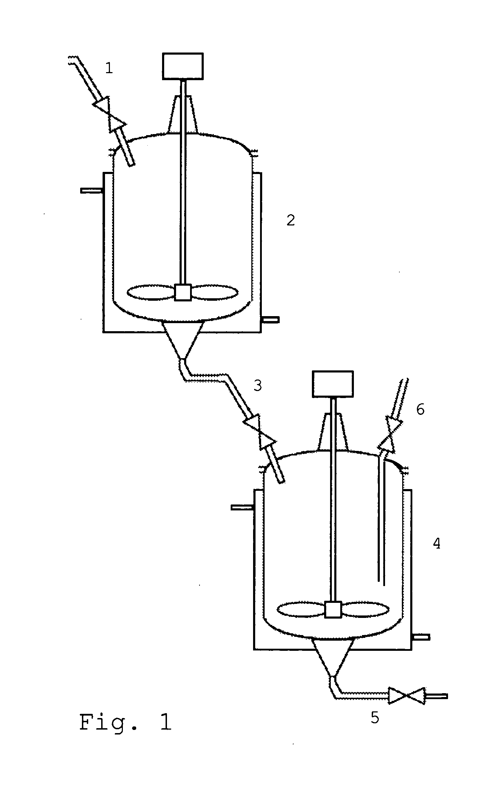

Fig. 1 zeigt eine bevorzugte Ausführungsform des erfindungsgemäßen Verfahrens:
Im ersten Schritt werden in den Rührkessel (2) über Leitung (1) die Rohstoffe (A), (B), (C) und ggf. (D) dosiert. Im Rührkessel (2) erfolgt die Reaktion zum Aminöl, anschließend wird das Aminöl über Leitung (3) in den Rührkessel (4) abgelassen. In Rührkessel (4) wird durch Zugabe des Neutralisationsmittels über Leitung (6) das Produkt deaktiviert und abgekühlt. In der Abkühlzeit einer Charge erfolgt im Rührkessel (2) bereits die Reaktion der nachfolgenden Charge. Sobald das Aminöl ausreichend abgekühlt ist, wird der Rührkessel (4) über Leitung (5) entleert und steht zur Abkühlung der nachfolgenden Charge zur Verfügung.

Der Vorteil des erfindungsgemäßen Verfahrens ist, dass die Anlagenkapazität bei gleichem Reaktorvolumen für die Reaktion durch einen zusätzlichen Rührkessel für die Abkühlung wesentlich erhöht (nahezu verdoppelt) wird. Das Verfahren ist sehr wirtschaftlich, da die Investitions- und Betriebskosten niedrig sind.

Das Verfahren ist sehr wirtschaftlich, da es hohe Massendurchsätze erlaubt. Die Investitionskosten des Abkühl-Rührwerkes sind deutlich niedriger als in einen ReaktionsRührkessel, da der Abkühlrührkessel wesentlich weniger Peripherie benötigt (keine Vorratsbehälter mit Dosier-Einheiten, keine Vakuum- und Destillations-Vorrichtungen, usw.).

Die Betriebskosten sind beim erfindungsgemäßen Verfahren niedriger, da die Wärme im Reaktionsrührkessel für den folgenden Ansatz genutzt wird. Das erfindungsgemäße Verfahren ist damit sehr energiesparend.

Überraschend konnte zusätzlich gefunden werden, dass durch die Trennung der Reaktion und Deaktivierung/Abkühlung die Katalysatorkonzentration (damit auch die Menge an Neutralisationsmittel) gesenkt werden konnte. Dies wirkte sich positiv auf die Produkteigenschaften aus (keine Trübung, höhere Stabilität).

In einem weiteren bevorzugten Verfahren, in dem zur Salzabtrennung ein Filtrationsschritt notwendig ist, wird der zur Abkühlung genutzte Rührkessel gleichzeitig auch als Vorlagebehälter für die Filtration genutzt. Der ansonsten zeitaufwendige zusätzliche Filtrationsschritt verringert dadurch nicht den Massendurchsatz des Gesamt-Verfahrens.

Die bei dem erfindungsgemäßen Verfahren eingesetzten Rührkessel können aus Glas, Edelstahl, Hastelloy und Stahlemail bestehen. Sie besitzen vorzugsweise eine Größe von 0,5 bis 10 m³ und ein Länge/Durchmesser-Verhältnis von vorzugsweise 0,2 bis 5, bevorzugt 0,5 bis 2.
Die Rührkessel können folgende Rührer enthalten:
Propellerrührer: meist 3 Flügel, ähnlich einer Schiffsschraube geformt, axial fördernd.
Schrägblattrührer: schräg angestellte, meist rechtwinklige Blätter, wie Propellerrührer axial fördernd.
Scheibenrührer: Kreisscheibe mit meist 6 von der Welle nach außen angeordneten, senkrecht stehenden Blättern, radial fördernd.
Impellerrührer: bodennah angebrachte gebogene Arme aus Rohren, oft emailliert.
Kreuzbalkenrührer: Schrägblattrührer mit meist 4 Blättern, mehrfach versetzt übereinander angebracht, insbesondere für grosse Rührkessel.
Ankerrührer: wandnah geführt.
An der Behälterwand können Stromstörer installiert sein.

Bei dem erfindungsgemäßen Verfahren werden als Organopolysiloxane (A) vorzugsweise solche ausgewählt aus der Gruppe von
linearen Polydiorganosiloxanen der allgemeinen Formel

HOR₂SiO(R₂SiO)ₓSiR₂OH (I)

und

R₃SiO(R₂SiO)_{y}SiR₃ (II)

cyclischen Polydiorganosiloxanen der allgemeinen Formel

(OSiR₂)_{z} (III)

und deren Mischungen eingesetzt,
wobei R gleich oder verschieden sein kann und einen einwertigen gegebenenfalls halogenierten Kohlenwasserstoffrest mit 1 bis 18 Kohlenstoffatomen bedeutet,
x 0 oder eine ganze Zahl von 1 bis 800, bevorzugt 10 bis 450, besonders bevorzugt 30 bis 150, ist.
y 0 oder eine ganze Zahl von 1 bis 800, bevorzugt 10 bis 450, besonders bevorzugt 30 bis 150, ist und
z eine ganze Zahl von 3 bis 12 ist.

Innerhalb bzw. entlang der Siloxankette der Siloxane der zuvor angegebenen Formeln (I) - (III) können, was durch derartige Formeln üblicherweise nicht dargestellt wird, zusätzlich zu den Diorganosiloxaneinheiten R₂SiO noch andere Siloxaneinheiten vorliegen. Beispiele für solche anderen, meist nur als Verunreinigung vorliegenden Siloxaneinheiten sind solche der Formeln RSiO_{3/2}, R₃SiO_{1/2} und SiO₂, wobei R die dafür angegebene Bedeutung hat.

Vorzugsweise werden bei dem erfindungsgemäßen Verfahren die Organopolysiloxane (A) in Mengen 0,1 bis 99,99 Gew.-%, bevorzugt 18 bis 99,9 Gew.-%, besonders bevorzugt 51 bis 99 Gew.-%, jeweils bezogen auf das Gesamtgewicht der Reaktionsmischung aus (A), (B), (C) und ggf. (D) eingesetzt.

Vorzugsweise werden bei dem erfindungsgemäßen Verfahren als Aminoalkylsilane (B) solche der allgemeinen Formel

XₙR₍₃₋ₙ₎SiZ (IV)

sowie deren Teil- oder Vollhydrolysate eingesetzt,
wobei
R die zuvor dafür angegebene Bedeutung hat,
X eine hydrolysefähige Gruppe ausgewählt aus der Gruppe von -OR¹, -NR'₂ und -Cl ist, vorzugsweise -OR¹ ist,
R¹ einen einwertigen Alkylrest mit 1 bis 18 Kohlenstoffatomen bedeutet, der durch ein oder zwei Ethersauerstoffatome substituiert sein kann,
R' Wasserstoff oder einen einwertigen Kohlenwasserstoffrest mit 1 bis 18 Kohlenstoffatomen bedeutet,
Z einen einwertigen SiC-gebundenen, basischen Stickstoff aufweisenden Kohlenwasserstoffrest bedeutet und
n 2 oder 3 ist.
Beispiele für Kohlenwasserstoffreste R, R¹ oder R' sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.
Die Kohlenwasserstoffreste R, R¹ oder R' enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste R mit aliphatischer Doppelbindung sind der Vinyl-, Allyl-, und 5-Hexen-1-ylrest. Vorzugsweise enthalten jedoch höchstens 1% der Kohlenwasserstoffreste R eine Doppelbindung.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 18 Kohlenstoffatomen, wobei der Methylrest besonders bevorzugt ist.

Beispiele für R¹ sind CH₃-, CH₃CH₂-, (CH₃)₂CH-, CH₃CH₂CH₂-, CH₃CH₂CH₂CH₂-, CH₃CH₂OCH₂CH₂-, CH₃CH₂OCH₂- und CH₃OCH₂CH₂- Reste.

Vorzugsweise ist Z in Formel (IV) ein Rest der Formel

-R²-[NR³-R⁴-]_{g}NR³₂.

wobei R² ein zweiwertiger linearer oder verzweigter Kohlenwasserstoffrest mit 1 bis 18 Kohlenstoffatomen bedeutet, R³ die Bedeutung von R¹ hat oder einen Acylrest bedeutet, vorzugsweise ein Wasserstoffatom ist,
R⁴ ein zweiwertiger Kohlenwasserstoffrest mit 1 bis 6 Kohlenstoffatomen und
g 0, 1, 2, 3 oder 4, vorzugsweise 0 oder 1 ist.

Bevorzugte Beispiele für Reste Z sind:
H₂N(CH₂)₃ -
H₂N(CH₂)₂NH(CH₂)₃-
H₂N(CH₂)₂NH(CH₂)CH (CH₃)CH₂-
(Cyclohexyl)NH(CH₂)₃-
CH₃NH(CH₂)₃-
(CH₃)₂N(CH₂)₃-
CH₃CH₂NH(CH₂)₃-
(CH₃CH₂)₂N(CH₂)₃-
CH₃NH(CH₂)₂NH(CH₂)₃-
(CH₃)₂N(CH₂)NH(CH₂)₃-
CH₃CH₂NH(CH₂)₂NH(CH₂)₃-
(CH₃CH₂)₂N(CH₂)₂NH(CH₂)₃-
und deren teil- oder vollacylierte Formen.

Beispiele für Aminoalkylsilane (IV) sind
(3-Aminopropyl)dimethoxymethylsilan,
(3-Aminopropyl)diethoxymethylsilan,
(3-Aminopropyl)trimethoxysilan,
(3-Aminopropyl)triethoxysilan,
[N-(2-Aminoethyl)-3-aminopropyl]dimethoxymethylsilan,
[N-(2-Aminoethyl)-3-aminopropyl]diethoxymethylsilan,
[N-(2-Aminoethyl)-3-aminopropyl]trimethoxysilan,
[N-(2-Aminoethyl)-3-aminopropyl]triethoxysilan,
(Aminomethyl)dimethoxymethylsilan,
(Aminomethyl)diethoxymethylsilan,
(Aminomethyl)trimethoxysilan,
(Aminomethyl)triethoxysilan.

Besonders bevorzugt sind
[N-(2-Aminoethyl)-3-aminopropyl]dimethoxymethylsilan,
[N-(2-Aminoethyl)-3-aminopropyl]trimethoxysilan und
(3-Aminopropyl)dimethoxymethylsilan
sowie deren cyclische oder lineare Teil- oder Vollhydrolysate.

Bevorzugt werden die Aminoalkylsilanhydrolysate (B) aus aminoalkylfunktionellen Dialkoxysilanen, wie (3-Aminopropyl)dimethoxymethylsilan oder [N-(2-Aminoethyl)-3-aminopropyl]dimethoxymethylsilan, durch Hydrolyse in Wasser hergestellt.

Als Aminoalkylsilanhydrolysate (B) werden daher vorzugsweise solche der allgemeinen Formel

HO(ZRSiO)ₘH (VI)

eingesetzt,
wobei R und Z die zuvor dafür angegebene Bedeutung haben und
m eine ganze Zahl von 2 bis 50 ist.

Vorzugsweise werden Aminoalkylsilane (B) bzw. deren Teil- oder Vollhydrolysate in Mengen von 0,01 bis 99,9 %, bevorzugt 0,1 bis 82 % und besonders bevorzugt 1 bis 49 % eingesetzt, jeweils bezogen auf das Gesamtgewicht der eingesetzten Polysiloxane (A) und ggf. (D).

Als basische Katalysatoren (C) können Kondensations- und Equilibrierungskatalysatoren bei dem erfindungsgemäßen Verfahren eingesetzt werden.

Vorzugsweise werden als basische Katalysatoren (C) Alkali- oder Erdalkalimetallhydroxide, -oxide, -alkoholate oder -siloxanolate eingesetzt, die zuvor ggf. in einem geeigneten Lösungsmittel gelöst werden.

Es können als Katalysatoren (C) auch thermisch zersetzbare quaternäre Ammoniumhydroxide und Phosphoniumhydroxide eingesetzt werden.
Beispiele hierfür sind Tetramethylammoniumhydroxid, Benzyltriethylammoniumhydroxid, Tetra-n-propylammoniumhydroxid, Benzyldimethylethylammoniumhydroxid und Benzytrimethylammoniumhydroxid. Benzytrimethylammoniumhydroxid ist besonders bevorzugt. Weiterhin ist es bevorzugt, die quaternärem Ammoniumhydroxide oder Phosphoniumhydroxide in Form einer Lösung einzusetzen. Beispiel für ein solches Lösungsmittel sind Alkohole, z. B. Methanol.

Bevorzugt werden als basische Katalysatoren (C) Alkalimetallhydroxide, Alkalimetallalkoholate, Alkalimetallsiloxanolate und deren Mischungen eingesetzt. Beispiele für Alkalimetallhydroxide sind Kaliumhydroxid und Natriumhydroxid.
Beispiele für Alkalimetallalkoholate sind Natriummethanolat und Natriumethanolat.
Beispiele für Alkalisiloxanolate sind Natriumsiloxanolate. Bevorzugt werden Kalium- oder Natriumhydroxid (ggf. in dem Lösungsmittel Methanol oder Wasser), und Natriummethanolat (ggf. in dem Lösungsmittel Methanol) verwendet.

Die basischen Katalysatoren (C) werden vorzugsweise in Mengen von 1 bis 1000 Gew.-ppm, bevorzugt 10 bis 400 Gew.-ppm, besonders bevorzugt 30 bis 200 Gew.-ppm, jeweils bezogen auf das Gesamtgewicht der Reaktionsmischung aus (A), (B), (C) und ggf. (D), eingesetzt.

Falls bei dem erfindungsgemäßen Verfahren reaktive Si-OHterminierte Polysiloxane der Formel (I) zum Einsatz kommen, kann zusätzlich ein Kettenterminierungsreagenz (D), ein sogenannter Stopper oder Stoppersiloxan, verwendet werden. Dazu sind prinzipiell alle Verbindungen geeignet, die mit Si-OH-Gruppen reagieren können und bezüglich ihrer Reaktivität mit Si-OH-Gruppen monofunktionell sind oder solche monofunktionellen Gruppen bilden können. Darüber hinaus können diese Kettenterminierungsreagenzien weitere funktionelle Gruppen tragen, die nicht mit den Si-OH-Gruppen oder den Aminoalkylgruppen reagieren, und die bei einer gegebenenfalls weiteren Umsetzung des nach dem erfindungsgemäßen Verfahren hergestellten Aminöls zur Reaktion gebracht werden, um zusätzliche Effekte zu erzielen.

Als Kettenterminierungsreagenz (D) werden bei dem erfindungsgemäßen Verfahren vorzugsweise solche ausgewählt aus der Gruppe von Monoalkoxysilanen, Aminomonoalkoxysilanen, lineare und cyclische Silazane, Alkohole, kurzkettige lineare Diorganopolysiloxane und deren Mischungen eingesetzt.

Dazu zählen z. B. Monoalkoxytrialkylsilane, (Aminoalkyl)monoalkoxydialkylsilane, lineare oder cyclische Silazane, Alkohole, kurzkettige lineare Polydiorganosiloxane oder deren Mischungen.

Beispiele für Monoalkoxytrialkylsilane sind solche der Formel

R₃Si(OR¹) (VII)

und

Beispiele für (Aminoalkyl)monoalkoxydialkylsilane sind solche der Formel

R₂ZSi(OR¹) (VIII)

wobei R, R¹ und Z die zuvor dafür angegebene Bedeutung haben.

Beispiele für Alkohole sind solche der allgemeinen Formel

H-[O(CHR⁵)₁]ₖ OR⁶ (IX)

wobei R die zuvor dafür angegebene Bedeutung hat,
R⁵ gleich oder verschieden sein kann und ein Wasserstoffatom oder einen C₁- bis C₁₈-Kohlenwasserstoffrest bedeutet,
R⁶ einen C₁- bis C₃₀-Kohlenwasserstoffrest oder eine Gruppe der allgemeinen Formel -(C=O)-R⁷ bedeutet, wobei R⁷ ein Rest R⁵ oder O-R⁵ ist,
1 2, 3 oder 4 und
k 0 oder eine ganze Zahl von 1 bis 100 ist.

Beispiele für kurzkettige lineare Polydiorganosiloxane als Kettenterminierungsreagenz (D) sind
kurzkettige endständige Triorganosiloxygruppen aufweisende Polydiorganosiloxane der Formel

R₃SiO(SiR₂O)ᵥSiR₃ (X)

und
kurzkettige endständige Hydroxy- oder Alkoxydiorganosiloxygruppen aufweisende Polydiorganosiloxane der Formel

(R''O)R₂SiO(SiR₂O)_{w}SiR₃ (XI)

wobei R die zuvor dafür angegebene Bedeutung hat,
R'' ein Wasserstoffatom oder ein Rest R¹ ist,
v 0 oder eine ganze Zahl von 1 bis 150, bevorzugt 30 bis 100, ist und
w 0 oder eine ganze Zahl von 1 bis 150, bevorzugt 30 bis 100, ist und

Falls beim erfindungsgemäßen Verfahren ein Stopper oder Stoppersiloxan (D) als Kettenterminierungsreagenz zum Einsatz kommt, wird dieses vorzugsweise in Mengen von 0,01 bis 50 %, bevorzugt 0,05 bis 30 % und besonders bevorzugt 1 und 20 %, jeweils bezogen auf das Gesamtgewicht der Reaktionsmischung aus (A), (B), (C) und (D), eingesetzt.

Die Deaktivierung des basischen Katalysators (C) kann durch die Zugabe von Neutralisationsmitteln (E) erfolgen, die mit den basischen Katalysatoren Salze bilden. Solche Neutralisationsmittel können z. B. Carbonsäuren oder Mineralsäuren sein. Bevorzugt sind Carbonsäuren, wie Methan-(Ameisensäure), Ethan- (Essigsäure), Propansäure.

Die Deaktivierung des basischen Katalysators (C) erfolgt jedoch bevorzugt durch die Zugabe von Neutralisationsmitteln (E), die mit den basischen Katalysatoren Salze bilden, die in den erhaltenen Aminölen löslich sind und somit keinerlei Trübungen erzeugen. Beispiele für solche Neutralisationsmittel (E) sind langkettige bei Raumtemperatur flüssige Carbonsäuren, wie n-Octansäure, 2-Ethylhexansäure, n-Nonansäure und Ölsäure, Hexadecan- und Octadecansäure, Kohlensäureester wie Propylencarbonat, oder Carbonsäureanhydride wie Octenylbernsteinsäureanhydrid.
Weitere Beispiele für Neutralisationsmittel (E), die mit den basischen Katalysatoren Salze bilden, die in den erhaltenen Aminölen löslich sind und somit keinerlei Trübungen erzeugen, sind Triorganosilylphosphate, vorzugsweise Trimethylsilylphosphate und Triorganophosphate, vorzugsweise Mischungen von Mono-, Di- und Triisotridecylphosphaten (erhältlich unter der Bezeichnung Hordaphos^{®} MDIT bei der Fa. Clariant). Bevorzugt werden als Trimethylsilyphosphate dabei Zusammensetzungen bestehend im wesentlichen aus
0-50 Gew.-% Monosilylphosphat der Formel: [(CH₃)₃SiO](HO)₂P=O
20-100 Gew.-% Disilylphosphat der Formel: [(CH₃)₃SiO]₂(HO)P=O
0-70 Gew.-% Trisilylphosphat der Formel: [(CH₃)₃SiO]₃P=O
wobei die Gesamtmenge 100 Gew.-% beträgt, eingesetzt. Die nötige Menge an Neutralisationsmitteln (E) richtet sich nach der eingesetzten Menge an basischen Katalysatoren (C) und beträgt vorzugsweise 0,05 bis 0,50 %, bevorzugt 0,15 bis 0,30 %, jeweils bezogen auf das Gesamtgewicht der Reaktionsmischung aus (A), (B), (C) und ggf. (D). Die Neutralisation kann dabei vor oder nach dem Abkühlen der Reaktionsmischung erfolgen.

Bei Einsatz von Ammoniumhydroxiden oder Phosphoniumhydroxiden als Katalysatoren (C) erfolgt die Deaktivierung durch thermische Zersetzung.

Die nach dem erfindungsgemäßen Verfahren erhaltenen Aminoalkylgruppen aufweisenden Organopolysiloxane (Aminöle) weisen eine Restflüchtigkeit von vorzugsweise weniger als 4 Gew.-%, bevorzugt weniger als 2 Gew.-%, besonders bevorzugt weniger als 1 Gew.-% auf.
Die Restflüchtigkeit ist ein thermisch ermittelter Wert und wird dabei definiert als die Menge an flüchtigen Bestandteilen in Gew.-% beim Erhitzen einer Probenmenge von 5 g bei 120°C in einer Zeit von 60 min (120°C/5 g/60 min).
Ein großer Teil der flüchtigen Bestandteile sind cyclische Siloxane, wobei neben höheren Cyclen Octamethyltetrasiloxan (D₄) enthalten ist.

Eine besonders bevorzugte Ausführungsform des erfindungsgemäßen Verfahrens liefert Aminöle mit außerordentlich niedrigen Restflüchtigkeiten, vorzugsweise kleiner als 2%, bevorzugt kleiner als 1 Gew.-%, bei besonders niedrigen durchschnittlichen Reaktionszeiten, vorzugsweise zwischen 1 und 50 Minuten, ohne dass ein reduzierter Druck gegenüber dem den Reaktor umgebenden Atmosphärendruck an den Reaktor angelegt werden muss. Bei dieser besonders bevorzugten Ausführungsform des erfindungsgemäßen Verfahrens werden als Aminoalkylsilane (B) Teil- und Vollhydrolysate der Aminoalkylsilane (B), bevorzugt Aminoalkylsilanhydrolysate der Formel (VI), eingesetzt. Bevorzugt werden bei diesem Verfahren Organopolysiloxane (A) der Formeln (I) und/oder (II) zusammen mit den Aminoalkylsilanhydrolysaten (B), bevorzugt der Formel (VI), eingesetzt.

Durch das erfindungsgemäße Verfahren werden bevorzugt Aminoalkylgruppen aufweisende Organopolysiloxane der allgemeinen Formel

(R⁸O)_{q}R_{3-q}SiO(ZRSiO)ₒ(R₂SiO)ₚSiR_{3-q}(OR⁸)_{q} (XII)

wobei R und Z die zuvor dafür angegebene Bedeutung haben,
R⁸ ein Wasserstoffatom oder R¹ ist,
o eine ganze Zahl von 1 bis 1000, bevorzugt von 2 bis 260, ist,
p eine ganze Zahl von 0 bis 2500, bevorzugt von 50 bis 650, ist
q 0 oder 1 ist.
erhalten.

Die nach dem erfindungsgemäßen Verfahren erhaltenen Aminoalkylgruppen aufweisenden Organopolysiloxane können unter anderem als Mittel zur Behandlung von porösen oder nicht porösen, saugfähigen oder nicht saugfähigen Substraten wie Leder, Vliesstoffen, Cellulosematerialien (Pulp & Paper), Textilien, Non-Wovens und Tissues, natürlichen und künstlichen Fasern, Gläsern und Keramiken, porösen mineralischen Baustoffen, Baubeschichtungen und Holz sowie als Bestandteil von Polier- und Beschichtungsmitteln für z. B. lackierte und nicht lackierte Metalle, Kunststoffe und Laminate verwendet werden, wobei den beschriebenen Substraten durch die Behandlung mit den nach dem erfindungsgemäßen Verfahren erhaltenen Aminoalkylgruppen tragenden Organopolysiloxanen hauptsächliche Eigenschaften wie Hydrophobie und/oder Weichgriff verliehen werden. Des Weiteren können die nach dem erfindungsgemäßen Verfahren erhaltenen Aminoalkylgruppen aufweisenden Organopolysiloxane unter anderem als Bestandteil von Entschäumerformulierungen, zur Papierleimung und Gipskarton-Beschichtung, als Pflegemittel für lackierte und nicht lackierte Metalle, Kunststoffe, Laminate, Gummis und Kautschuke, als Dispergierhilfsmittel, als Netzmittel, als Trenn(hilfs-)mittel, als Lackadditive, als PU-Schaumstabilisatoren sowie im Bereich der Körperpflege als Wirkstoffe in Haarkuren, Haarshampoos und Hautpflegemitteln eingesetzt werden. Die nach dem erfindungsgemäßen Verfahren erhaltenen Aminoalkylgruppen tragenden Organopolysiloxane können gelöst in organischen Lösemitteln oder dispergiert in Wasser, vorzugsweise in Form wässriger Emulsionen verwendet werden. Dabei können die nach dem erfindungsgemäßen Verfahren erhaltenen Aminoalkylgruppen aufweisenden Organopolysiloxane in der freien Aminform oder in Salzform, wie beispielsweise als Ammoniumchloridsalz oder Ammoniumcarboxylatsalz durch Zusatz von Salzsäure oder der entsprechenden Carbonsäure, zum Einsatz kommen. Zusammensetzungen, die die nach dem erfindungsgemäßen Verfahren erhaltenen Aminoalkylgruppen aufweisenden Organopolysiloxane enthalten, können weitere Zutaten enthalten, wie Tenside, Verdicker, die Rheologie verändernde Additive, Parfüme, Wachse, Weichmacher, Reinigungsmittel, Schmieröle, Elektrolyte, Aromastoffe, Biozide, pharmazeutische oder kosmetische Wirkstoffe.

### Beispiel 1: Prozess in 2 aufeinanderfolgenden Rührkesseln

In einem beheizbaren 15-L-Rührwerk (Rührwerk 1) wurde eine Mischung aus 11032 g eines OH-endständigen Polydimethylsiloxans mit einer Viskosität von 80 mPa·s bei 25°C, 321,1 g N-[(Aminoethyl-)aminopropyl]dimethoxymethylsilan und 228,0 g Diethylenglykolmonobutylether unter Rühren mit 11,6 g einer Lösung von Kaliumhydroxid in Methanol (20 %) versetzt.
Nach Probennahme und analytischer Bestimmung des KOH-Gehaltes wurde ein Wert von 201 Gew.-ppm KOH erhalten.
Unter Stickstoffatmosphäre wurde bei 100 mbar auf 85°C erhitzt. Dabei wurde in der Reaktionsmischung befindliches Methanol ausdestilliert. Bei Erreichen von 85°C wurden Temperatur und Vakuum solange beibehalten, bis kein Viskositätsanstieg mehr erfolgte.
Nach 120 Minuten bei 85°C wurde der Inhalt des Rührwerks 1 in ein zweites 15-L-Rührwerk (Rührwerk 2) abgelassen, so dass nach insgesamt drei Stunden Belegzeit Rührwerk 1 für den nachfolgenden Ansatz zur Verfügung stand.
Während in Rührwerk 2 unter Rühren mit 15,4 g eines Gemisches an Trimethylsilylphosphaten der Zusammensetzung
3 Gew.-% Mono-(trimethylsilyl)-phosphat,
74 Gew.-% Bis-(trimethylsilyl)-phosphat und
23 Gew.-% Tris-(trimethylsilyl)-phosphat,
neutralisiert wurde, wurde Rührwerk 1 erneut, wie zuvor beschrieben, mit Edukten befüllt.
Nach Probennahme aus Rührwerk 1 und analytischer Bestimmung des KOH-Gehaltes wurde diesmal ein Wert von 202 Gew.-ppm KOH erhalten.
Die Reaktion in Rührwerk 1 wurde erneut begonnen.
Nach dem Abkühlen auf ca. 50°C wurde der Inhalt des Rührwerks 2 in einen Produktbehälter entleert. Anschließend konnte der Inhalt des Rührwerks 1 nach beendeter Reaktion zur Neutralisation erneut in Rührwerk 2 abgelassen werden und nach der Abkühlung in einen Produktbehälter entleert werden.

Produktkampagne 1: Farbloses Öl, Viskosität von 1354 mPa•s bei 25°C, trübungsfrei [Trübungsmessung (Gerät TA6-FS, Hersteller Galvanic Applied Sciences Inc.) ergab einen Wert von 0 ppm].

Produktkampagne 2: Farbloses Öl, Viskosität von 1343 mPa•s bei 25 °C, trübungsfrei [Trübungsmessung (Gerät TA6-FS, Hersteller Galvanic Applied Sciences Inc.) ergab einen Wert von 1 ppm].

### Vergleichsversuch: Prozess in einem Rührkessel

Eine Mischung aus 11032 g eines OH-endständigen Polydimethylsiloxans mit einer Viskosität von 80 mPa·s bei 25°C, 321,1 g N-[(Aminoethyl-)aminopropyl]dimethoxymethylsilan und 228,0 g Diethylenglykolmonobutylether wurde unter Rühren mit 11,6 g einer Lösung von Kaliumhydroxid in Methanol (20 %) versetzt.
Nach Probennahme und analytischer Bestimmung des KOH-Gehaltes wurde ein Wert von 201 Gew.-ppm KOH erhalten.
Unter Stickstoffatmosphäre wurde bei 100 mbar auf 85°C erhitzt. Dabei wurde in der Reaktionsmischung befindliches Methanol ausdestilliert. Bei Erreichen von 85°C wurden Temperatur und Vakuum solange beibehalten, bis kein Viskositätsanstieg mehr erfolgte. Nach 120 Minuten wird mit 15,4 g eines Gemisches an Trimethylsilylphosphaten der Zusammensetzung aus Beispiel 1 neutralisiert und auf Raumtemperatur abgekühlt.
Nach der Entleerung stand das Rührwerk im Vergleich zu Beispiel 1 erst nach insgesamt 5,5 Stunden Belegzeit für den nachfolgenden Ansatz zur Verfügung.
Das erhaltene farblose Öl hatte eine Viskosität von 1364 mPa·s bei 25°C und war trübungsfrei, eine Trübungsmessung (Gerät aus Beispiel 1) ergab einen Wert von 0 ppm.

Ohne den Reaktionsbehälter nach der Entleerung zu reinigen wurden für eine zweite Versuchskampagne 11032 g des OH-endständigen Polydimethylsiloxans, 321,1 g N-[(Aminoethyl)-aminopropyl]dimethoxymethylsilan, 228,0 g Diethylenglykolmonobutylether und 11,6 g einer Lösung von Kaliumhydroxid in Methanol (20 %) eingewogen, und die Mischung bei Raumtemperatur für 15 min gerührt.
Nach Probennahme und analytischer Bestimmung des KOH-Gehaltes wurde diesmal ein Wert von 188 Gew.-ppm KOH erhalten.
Der Versuch wurde nach der zuvor beschrieben Vorgehensweise fortgesetzt und beendet.
Das erhaltene farblose Öl hatte eine Viskosität von 1180 mPa·s bei 25°C und war nicht trübungsfrei, die Trübungsmessung ergab diesmal einen Wert von 21 ppm.

### Beispiel 2:

In einem beheizbaren 15-L-Rührwerk (Rührwerk 1) wurde eine Mischung aus 11032 g eines OH-endständigen Polydimethylsiloxans mit einer Viskosität von 80 mPa·s bei 25°C und 321,1 g N-[(Aminoethyl-)aminopropyl]dimethoxymethylsilan unter Rühren mit 2,32 g Benzyltrimethylammoniumhydroxid versetzt. Unter Stickstoffatmosphäre wurde bei 250 mbar auf 85°C erhitzt und die Reaktionsmischung für 60 min unter diesen Bedingungen gerührt.
Anschließend wurde der Inhalt des Rührwerks 1 in ein zweites auf 170°C vorgeheiztes 15-L-Rührwerk (Rührwerk 2) abgelassen. Während in Rührwerk 2 nach Erreichen von 150°C unter Rühren bei 20 mbar der Katalysator deaktiviert wurde, wurde Rührwerk 1 erneut, wie zuvor beschrieben, mit Edukten befüllt und die Reaktion erneut begonnen.
Nach dem Abkühlen auf ca. 50°C wurde der Inhalt des Rührwerks 2 in einen Produktbehälter entleert. Anschließend konnte der Inhalt des Rührwerks 1 nach beendeter Reaktion zur Deaktivierung des Katalysators erneut in Rührwerk 2 abgelassen werden und nach der Abkühlung in einen Produktbehälter entleert werden.

Produktkampagne 1: Farbloses Öl, Viskosität von 1080 mPa·s bei 25 °C, trübungsfrei [Trübungsmessung (Gerät TA6-FS, Hersteller Galvanic Applied Sciences Inc.) ergab einen Wert von 0 ppm].

Produktkampagne 2: Farbloses Öl, Viskosität von 1091 mPa·s bei 25 °C, trübungsfrei [Trübungsmessung (Gerät TA6-FS, Hersteller Galvanic Applied Sciences Inc.) ergab einen Wert von 0 ppm].

## Patentansprüche

1. Verfahren zur Herstellung von Aminoalkylgruppen aufweisenden Organopolysiloxanen durch
(i) Umsetzung von
(A) linearen, cyclischen oder verzweigten Organopolysiloxanen mit
(B) Aminoalkylsilanen, die einen SiC-gebundenen, basischen Stickstoff aufweisenden Kohlenwasserstoffrest und 2 oder 3 hydrolysefähige Gruppen aufweisen,
oder deren Teil- oder Vollhydrolysate,
in Gegenwart von
(C) basischen Katalysatoren
und gegebenenfalls in Gegenwart von
(D) Kettenterminierungsreagenzien
bei einer Temperatur von mindestens 60°C, anschließend an die Umsetzung (i)
(ii) Deaktivierung der basischen Katalysatoren (C) und
(iii) Abkühlung der Reaktionsprodukte auf eine Temperatur unter 60°C, wobei die Abkühlung (iii) vor, während oder nach der Deaktivierung (ii) der Katalysatoren erfolgt,
mit der Maßgabe, dass das Verfahren in mindestens zwei aufeinanderfolgenden Rührkesseln durchgeführt wird, wobei die Umsetzung (i) und die Abkühlung (iii) getrennt voneinander in verschiedenen Rührkesseln erfolgen.

2. Verfahren nach Anspruch 1, **dadurch gekennzeichnet, dass** die Deaktivierung (ii) entweder
im gleichen Rührkessel wie die Umsetzung (i) oder
im gleichen Rührkessel wie die Abkühlung (iii) oder
in einem eigenen Rührkessel getrennt von der Umsetzung (i) und Abkühlung (iii) erfolgt.

3. Verfahren nach Anspruch 1 oder 2, **dadurch gekennzeichnet, dass** die Abkühlung (iii) nach der Deaktivierung (ii) erfolgt.

4. Verfahren nach Anspruch 1, 2 oder 3, **dadurch gekennzeichnet, dass** die Umsetzung (i) in einem ersten Rührkessel und die Abkühlung (iii) in einem nachfolgenden zweiten Rührkessel erfolgt, wobei die Deaktivierung (ii) entweder im ersten oder im zweiten Rührkessel erfolgt, mit der Maßgabe, dass gleichzeitig während im zweiten Rührkessel die Abkühlung (iii) erfolgt, im ersten Rührkessel bereits die Umsetzung (i) der in den ersten Rührkessel wieder neu zugeführten Edukte erfolgt.

5. Verfahren nach einem der Ansprüche 1 bis 4, **dadurch gekennzeichnet, dass** die Umsetzung (i) in einem ersten Rührkessel und die Deaktivierung (ii) und Abkühlung (iii) in einem nachfolgenden zweiten Rührkessel durchgeführt werden, mit der Maßgabe, dass gleichzeitig während im zweiten Rührkessel die Deaktivierung (ii) und die Abkühlung (iii) erfolgen, im ersten Rührkessel bereits die Umsetzung (i) der in den ersten Rührkessel wieder neu zugeführten Edukte erfolgt.

6. Verfahren nach einem der Ansprüche 1 bis 5, **dadurch gekennzeichnet, dass** die Umsetzung (i) bei einer Temperatur von 60 bis 180°C durchgeführt wird.

7. Verfahren nach einem der Ansprüche 1 bis 6, **dadurch gekennzeichnet, dass** die Abkühlung (iii) auf eine Temperatur von 20 bis 55°C erfolgt.

8. Verfahren nach einem der Ansprüche 1 bis 7, **dadurch gekennzeichnet, dass** die Deaktivierung (ii) durch Neutralisation oder thermische Zersetzung der basischen Katalysatoren (C) erfolgt.

9. Verfahren nach Anspruch 8, **dadurch gekennzeichnet, dass** wenn die Deaktivierung (ii) durch Neutralisation der Katalysatoren erfolgt, die Deaktivierung (ii) getrennt von der Umsetzung (i) im nachfolgenden zweiten Rührkessel durchgeführt wird und
wenn die Deaktivierung (ii) durch thermische Zersetzung der Katalysatoren erfolgt, die Deaktivierung (ii) im ersten oder zweiten Rührkessel durchgeführt wird.

## Claims

1. Process for preparing organopolysiloxanes having aminoalkyl groups by
(i) reacting
(A) linear, cyclic or branched organopolysiloxanes with
(B) aminoalkyl silanes which comprise an SiC-bonded hydrocarbon radical comprising basic nitrogen and 2 or 3 hydrolyzable groups, or partial or full hydrolyzates thereof,
in the presence of
(C) basic catalysts
and optionally in the presence of
(D) chain-terminating reagents,
at a temperature of at least 60°C,
then, after the reaction (i),
(ii) deactivating the basic catalysts (C) and
(iii) cooling the reaction products to a temperature below 60°C, the cooling (iii) being effected before, during or after the deactivation (ii) of the catalysts,
with the proviso that the process is performed in at least two successive stirred tanks, the reaction (i) and the cooling (iii) proceeding separately in different stirred tanks.

2. Process according to Claim 1, **characterized in that** the deactivation (ii) proceeds either
in the same stirred tank as the reaction (i) or
in the same stirred tank as the cooling (iii) or
in a dedicated stirred tank separately from the reaction (i) and the cooling (iii).

3. Process according to Claim 1 or 2, **characterized in that** the cooling (iii) proceeds after the deactivation (ii).

4. Process according to Claim 1, 2 or 3,
**characterized in that** the reaction (i) proceeds in a first stirred tank and the cooling (iii) in a downstream second stirred tank, the deactivation (ii) proceeding either in the first or in the second stirred tank, with the proviso that, while the cooling (iii) proceeds in the second stirred tank, the reaction (i) of the reactants newly supplied to the first stirred tank is simultaneously already proceeding in the first stirred tank.

5. Process according to any one of Claims 1 to 4, **characterized in that** the reaction (i) is carried out in a first stirred tank and the deactivation (ii) and cooling (iii) in a downstream second stirred tank, with the proviso that, while the deactivation (ii) and the cooling (iii) proceed in the second stirred tank, the reaction (i) of the reactants newly supplied to the first stirred tank is simultaneously already proceeding in the first stirred tank.

6. Process according to any one of Claims 1 to 5, **characterized in that** the reaction (i) is performed at a temperature of from 60 to 180°C.

7. Process according to any one of Claims 1 to 6,
**characterized in that** the cooling (iii) is effected to a temperature of from 20 to 55°C.

8. Process according to any one of Claims 1 to 7, **characterized in that** the deactivation (ii) is effected by neutralization or thermal decomposition of the basic catalysts (C).

9. Process according to Claim 8, **characterized in that,** when the deactivation (ii) is effected by neutralizing the catalysts, the deactivation (ii) is carried out in the downstream second stirred tank separately from the reaction (i), and, when the deactivation (ii) is effected by thermal decomposition of the catalysts, the deactivation (ii) is carried out in the first or second stirred tank.

## Revendications

1. Procédé de fabrication d'organopolysiloxanes comportant des groupes aminoalkyle par
(i) réaction
(A) d'organopolysiloxanes linéaires, cycliques ou ramifiés avec
(B) des aminoalkylsilanes qui comportent un radical hydrocarboné relié à SiC, comportant un azote basique, et 2 ou 3 groupes hydrolysables,
ou leurs hydrolysats partiels ou entiers,
en présence de
(C) catalyseurs basiques
et éventuellement en présence de
(D) réactifs de terminaison des chaînes
à une température d'au moins 60 °C,
puis, après la réaction (i),
(ii) désactivation des catalyseurs basiques (C) et
(iii) refroidissement des produits de la réaction à une température inférieure à 60 °C, le refroidissement (iii) ayant lieu avant, pendant ou après la désactivation (ii) des catalyseurs,
à condition que le procédé soit réalisé dans au moins deux cuves agitées successives, la réaction (i) et le refroidissement (iii) ayant lieu séparément l'un de l'autre dans des cuves agitées différentes.

2. Procédé selon la revendication 1, **caractérisé en ce que** la désactivation (ii) a lieu dans la même cuve agitée que la réaction (i) ou dans la même cuve agitée que le refroidissement (iii) ou dans sa propre cuve agitée séparément de la réaction (i) et du refroidissement (iii).

3. Procédé selon la revendication 1 ou 2, **caractérisé en ce que** le refroidissement (iii) a lieu après la désactivation (ii).

4. Procédé selon la revendication 1, 2 ou 3,
**caractérisé en ce que** la réaction (i) a lieu dans une première cuve agitée et le refroidissement (iii) dans une seconde cuve agitée ultérieure, la désactivation (ii) ayant lieu dans la première ou dans la seconde cuve agitée, à condition que la réaction (i) des réactifs de nouveau introduits dans la première cuve agitée ait déjà lieu simultanément dans la première cuve agitée pendant que le refroidissement (iii) a lieu dans la seconde cuve agitée.

5. Procédé selon l'une quelconque des revendications 1 à 4, **caractérisé en ce que** la réaction (i) a lieu dans une première cuve agitée et la désactivation (ii) et le refroidissement (iii) dans une seconde cuve agitée ultérieure, à condition que la réaction (i) des réactifs de nouveau introduits dans la première cuve agitée ait déjà lieu simultanément dans la première cuve agitée pendant que la désactivation (ii) et le refroidissement (iii) ont lieu dans la seconde cuve agitée.

6. Procédé selon l'une quelconque des revendications 1 à 5, **caractérisé en ce que** la réaction (i) est réalisée à une température de 60 à 180 °C.

7. Procédé selon l'une quelconque des revendications 1 à 6, **caractérisé en ce que** le refroidissement (iii) a lieu à une température de 20 à 55 °C.

8. Procédé selon l'une quelconque des revendications 1 à 7, **caractérisé en ce que** la désactivation (ii) a lieu par neutralisation ou décomposition thermique des catalyseurs basiques (C).

9. Procédé selon la revendication 8, **caractérisé en ce que** lorsque la désactivation (ii) a lieu par neutralisation des catalyseurs, la désactivation (ii) est réalisée séparément de la réaction (i) dans la seconde cuve agitée ultérieure, et lorsque la désactivation (ii) a lieu par décomposition thermique des catalyseurs, la désactivation (ii) est réalisée dans la première ou dans la seconde cuve agitée.
